# EUROPEAN PATENT APPLICATION

(11) **EP 1 058 457 A1**
(43) Date of publication of application: **06.12.2000**
(21) Application number: 00111664.9
(22) Date of filing: 31.05.2000
(51) Int. Cl.: H04N 7/22, H04B 10/24

(54) **An optical connection part of an optical fiber cable, and an optical communication apparatus using the same**

(30) Priority: 02.06.1999 JP 15579399; 08.10.1999 JP 28854599
(71) Applicant: SONY CORPORATION, Tokyo (JP)
(72) Inventor: Watanabe, Makoto, c/o Sony Corporation, Tokyo (JP)
(74) Representative: MÜLLER & HOFFMANN Patentanwälte

(57) **Abstract**

An optical connection part for an optical digital video communication cable comprises a single core type optical fiber for transmitting a signal light there-through, an incident optical fiber adhered to an end face of the single core type optical fiber, and a detecting optical fiber adhered to the end face of the single core type optical fiber, wherein the detecting optical fiber being optically separated from the incident optical fiber in order to avoid undesirable invasion of the signal light from the incident optical fiber to the detecting optical fiber.

## Description

### BACKGROUND OF THE INVENTION

### 1. Field of the Invention

The present invention relates to an optical connection part of an optical fiber cable to be used in an optical communication apparatus, and to an optical communication apparatus for the two-way full-duplex optical digital communication.

### 2. Description of the Related Art

Conventionally, in the field of a digital signal transmission for example, due to a rapid spread of digital consumer appliances such as digital VTRs, digital audio players and personal computers, it is required to rapidly transmit a digital signal on a two-way communication line laid down among these digital appliances. In order to respond to these requirements, a rapid serial digital communication system or standard such as defied by the IEEE-1394 standard has been proposed and has been started to use among these digital appliances.

By the way, when a high-speed digital signal of over 100 Mbit/sec is transmitted through a twisted-pair copper cable, there is a case where a noisy electromagnetic wave that causes an electromagnetic interference to other electronic appliances is radiated from this twisted-pair copper cable. On the contrary, a noisy electromagnetic wave is possible to be invaded into the twisted-pair copper cable from outside and these digital appliances show wrong or erroneous operation by virtue of thus invaded noisy electromagnetic wave.

From this reason, it is expected to apply so-called an optical fiber communication system to such high speed digital signal transmission among these digital appliances. In this case, after a digital electronic signal is converted into an optical signal, this optical signal is transmitted in an optical propagation medium such as an optical fiber cable.

For the high speed communication system using an optical fiber cable, the one-way type communication, the two-way half-duplex type communication or the two-way full-duplex type communication is employed depending on the requirements from a digital communication among these digital appliances.

The optical digital communication system of the one-way type is used in the case where flow of an optical digital signal is only one direction between two digital appliances. That of the two-way half-duplex type is used in the case where flow of the optical digital signal is possible to be switched alternately its direction and that of the two-way full-duplex type is used in the case where the optical digital signal is simultaneously transmitted and received between the two digital appliances within the optical digital communication cable.

In the optical digital communication system between digital appliances, an optical signal is received and/or transmitted using an electric to light conversion device provided in a signal transmitting section and a light to electric conversion device provided in a signal receiving section, respectively. Accordingly, in the optical digital communication system of the one-way type, a single wire of an optical fiber cable is satisfactory for a transmission medium, because flow of an optical signal is always restricted to one way between two digital appliances.

Further in the optical digital communication system of the two-way half-duplex type, both signal transmitting operation and signal receiving operation do not occur simultaneously in one digital communication appliance, therefore an interference between the signal transmitting section and the signal receiving section does not occur. And accordingly, also a single wire of an optical fiber is satisfactory for a transmission medium like the above mentioned the one-way type.

On the contrary, in the optical digital communication system of the two-way full-duplex type, both signal transmitting operation and signal receiving operation are simultaneously done in one communication appliance, so that if a single wire of an optical fiber is used for a transmission medium, not only for signal transmission but also for signal reception, there is a problem that causes an erroneous operation of the digital appliances at a receiving section because a part of light incident on an optical fiber returns to a receiving section at an optical connection part of the optical fiber cable.

Accordingly, in the optical digital communication system of the two-way full-duplex type, a pair of optical digital communication fiber cables of the one-way type digital communication system is prepared in the respective direction opposite to each other, and it is necessary to connect digital communication appliances by this pair of optical fiber cables.

Because of this reason, the cost for the optical fiber cable to be used in the optical digital communication system of the two-way full-duplex type is doubled compared to the case of the one-way type optical digital communication system, and further the optical fiber cable is in the form of optical fiber pair, so that there is a problem that a working efficiency for laying on these pair of optical cables is worse compared to a single wire optical fiber cable.

### SUMMARY OF THE INVENTION

It is a primary object of the present invention to present a new optical connection part for an optical fiber cable to be applied to a single wire optical communication apparatus, and an optical communication apparatus using the same.

It is a secondary object of the present invention to present a novel optical connection part for an optical fiber cable to be applied to a single wire optical two-way digital communication apparatus, and an optical two-way digital communication apparatus using the same.

According to the present invention, an optical connection part for an optical communication cable comprises a single core type optical fiber for transmitting a signal light there-through, at least one incident optical fiber adhered to an end face of the single core type optical fiber, and at least one detecting optical fiber adhered to the end face of the single core type optical fiber, wherein the detecting optical fiber is optically separated from the incident optical fiber.

In the another aspect of the present invention, an optical connection part for an optical communication cable comprises a single core type optical fiber for transmitting a signal light, at least one incident optical fiber adhered to an end face of the single core type optical fiber, wherein the incident optical fiber is formed by multi core type optical fiber, and at least one detecting optical fiber adhered to the end face of the single core type optical fiber, wherein the incident optical fiber is formed by multi core type optical fiber.

In the further aspect of the present invention, an optical connection part for an optical communication cable comprises a single core type optical fiber for transmitting a signal light, at least one incident optical fiber adhered to an end face of the single core type optical fiber, wherein the incident optical fiber is formed by single core type optical fiber, and at least one detecting optical fiber adhered to the end face of the single core type optical fiber, wherein the incident optical fiber is formed by single core type optical fiber.

The single core type optical fiber, the incident optical fiber and the detecting optical fiber are preferably made from plastic fiber material of the PMMA system.

In the further another aspect of the present invention, an optical digital communication apparatus for optical digital communication between a plurality of digital appliances comprises a single wire optical fiber of a single core type provided between two of the digital appliances and a pair of optical connection parts.

Each of the optical connection parts comprises an incident optical fiber adhered to an end face of the single core type optical fiber, and a detecting optical fiber adhered to the end face of the single core type optical fiber, wherein the detecting optical fiber is optically separated from the incident optical fiber.

Particularly each of optical connection part applied to the optical digital communication system of this invention, the incident optical fiber and the detecting optical fiber are respectively formed by a single core type optical fiber.

In another case, the incident optical fiber and the detecting optical fiber are respectively formed by a multi core type optical fiber.

According to the present invention, only a single wire optical fiber is necessary for the two-way full-duplex optical digital communication, the cost for the optical fiber cable is reduced compared to the conventional optical digital communication system, and a working efficiency for laying on these pair of fiber cable is improved.

### BRIEF DESCRIPTION OF THE DRAWING

Fig. 1 shows one example of an optical digital communication apparatus to which this invention is applied.

Figs. 2A to 2D inclusive show a set of drawings for explaining a first embodiment of an optical connection part for an optical fiber cable applied to the optical digital communication apparatus as shown in Fig. 1.

Figs. 3A to 3C inclusive show a set of drawings for explaining a second embodiment of an optical connection part for an optical fiber cable applied to the optical digital communication apparatus as shown in Fig. 1.

Fig. 4 shows a drawing for explaining an operation of a conventional optical connection part for an optical fiber cable.

Fig. 5 shows a summarized drawing showing an optical digital video communication apparatus to which the present invention is applied.

### DESCRIPTION OF THE PREFERRED EMBODIMENTS

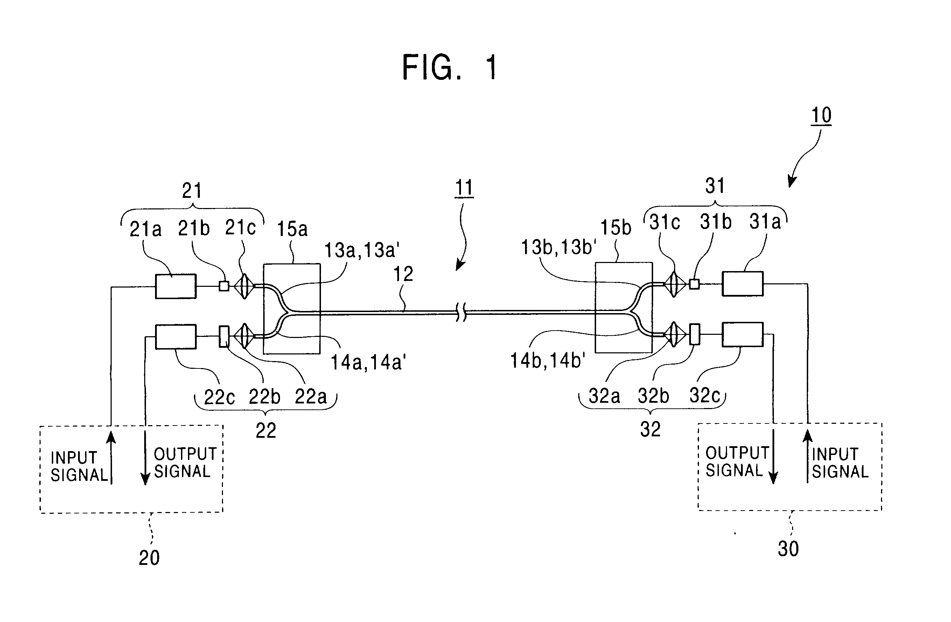

Here in below, preferred embodiments of this invention are explained in detail with reference to Fig. 1 to Fig. 5 inclusive. Namely, the examples described here in after are the best mode of embodiments of this invention, therefore there are technically suitable various limitations, but the scope of this invention is not affected by these limitations unless there is a description about restriction of this invention in the explanation below.

Fig. 1 shows an optical digital communication apparatus to which the present invention is applied. In this Fig. 1, an optical digital communication apparatus 10 carries out a so-called two-way full-duplex digital communication system and performs a two-way optical digital communication by way of an optical fiber cable 11 between a digital appliance 20 and a digital appliance 30 apart from each other.

The above described optical digital communication apparatus 10 comprises a light transmitting device 21 and a light receiving device 22 both connected to the digital appliance 20, a light transmitting device 31 and a light receiving device 32 both connected to the digital appliance 30, and an optical fiber 12 of the above mentioned optical fiber cable 11. This optical fiber 12 optically connects the light transmitting device 21, the light receiving device 22, the light transmitting device 31 and the light receiving device 32 each other.

The above described light transmitting device 21 ( 31 ) is so constructed, like as a conventional way, as to radiate a signal light at a light emitting device 21b ( 31b ) excited by a drive circuit 21a ( 31a ) in response to an input signal from the digital appliance 20 ( 30 ). Then the signal light is focused on an end face of the optical fiber 12 by lens 21c ( 31c ).

The above described light receiving device 22 ( 32 ) is so constructed, like as a conventional way, as to focus the signal light derived from the end face of the optical fiber 12 by lens 22a ( 32a ) on receiving faces of light detecting device 22b ( 32b ), and to output an output signal to the digital appliance 20 ( 30 ) after a detected signal light from the light receiving device 22 ( 32 ) is amplified at an amplifier 22c ( 32c ).

Preferably the optical fiber 12 of the above described optical fiber cable 11 is a single wire and single core type optical fiber, and the cable 11 comprises the optical fiber 12 and a pair of optical connection part 15a and 15b for the optical fiber 12.

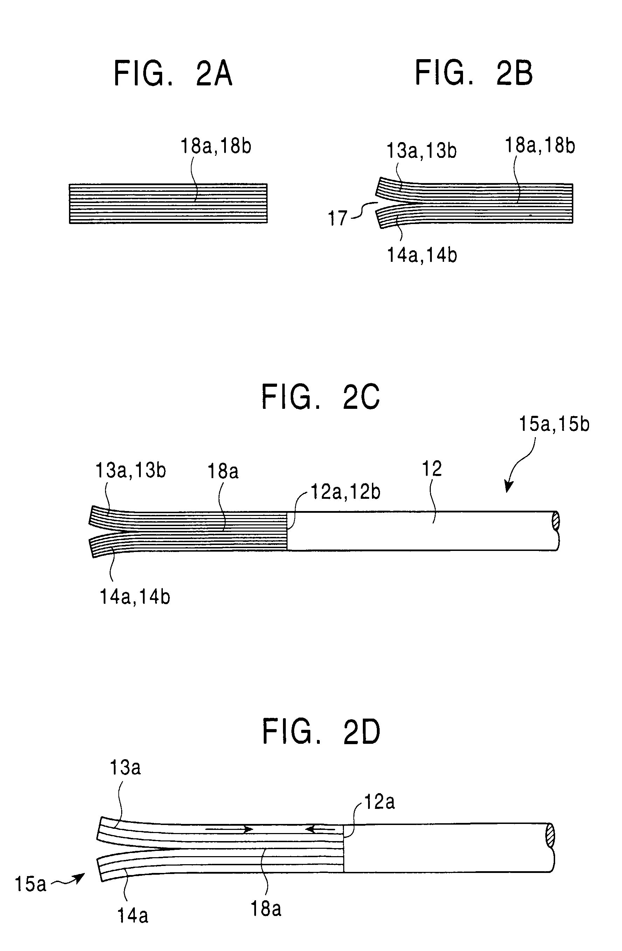

In the case of this first example, the optical connection part 15a ( 15b ) has a single wire of incident optical fiber 13a ( 13b ) for incidence of a transmitting signal light and a single wire of light detecting optical fiber 14a ( 14b ) for deriving a receiving signal light as shown in Fig.2c. Both optical fibers 13a ( 13b ) and 14a ( 14b ) are coupled to an end face 12a ( 12b ) of the optical fiber 12.

In this case, a single core type plastic optical fiber material of the PMMA ( polymethylmethacrylate ) system is used as the above described optical fiber 12, and a core diameter thereof is, for example, about 980 µ m and an outer diameter of a clad thereof is about 1000 µ m, for example and a polish of particle size of about 1 µm in diameter is treated on both end faces 12a and 12b of the optical fiber 12.

The above described incident optical fiber 13a ( 13b ) and the light detecting optical fiber 14a ( 14b ) are mechanically coupled to the end face 12a ( 12b ) of the optical fiber 12 by adhering with a cyanoacrylate instant adhesive, for example. The other end face of the incident optical fiber 13a ( 13b ) is coupled to the light emitting device 21b ( 31b ) through the lens 21c ( 31c ) and the other end face of the light receiving device 22b ( 32b ) is coupled to the light detecting device 22b ( 32b ), respectively.

An one example method of manufacturing the optical connection part 15a ( 15b ) as shown in Fig. 2C is explained with reference to Figs. 2A and 2C. In Fig. 2A, a reference numeral 18a ( 18b ) shows a plastic optical fiber material having a multi-core construction where a plurality of core materials is buried in a clad material. In case of this example, a multi-core fiber material of the PMMA system having a length of about 20 mm, for example, is used as shown in Fig. 2A. Regarding the multi-core fiber material 18, about 200 of core materials with a diameter of 85 µ m are buried within an outer diameter of about 1000 µ m.

After being treated with polish of 1 µm, a cut out 17 having about 8 µm of cutting depth is provided almost at a center of a diameter of the multi-core type plastic optical fiber material 18a ( 18b ) as shown in Fig. 2B. In accordance with a procedure as above described, the optical connection part 15a ( 15b ) having a multi-core construction as shown in Fig. 2 B is manufactured.

To this plastic optical fiber material 18a ( 18b ) of multi-core type, the single-core type plastic optical fiber 12 of 20 m long is adhered as described above and depicted in Fig. 2C.

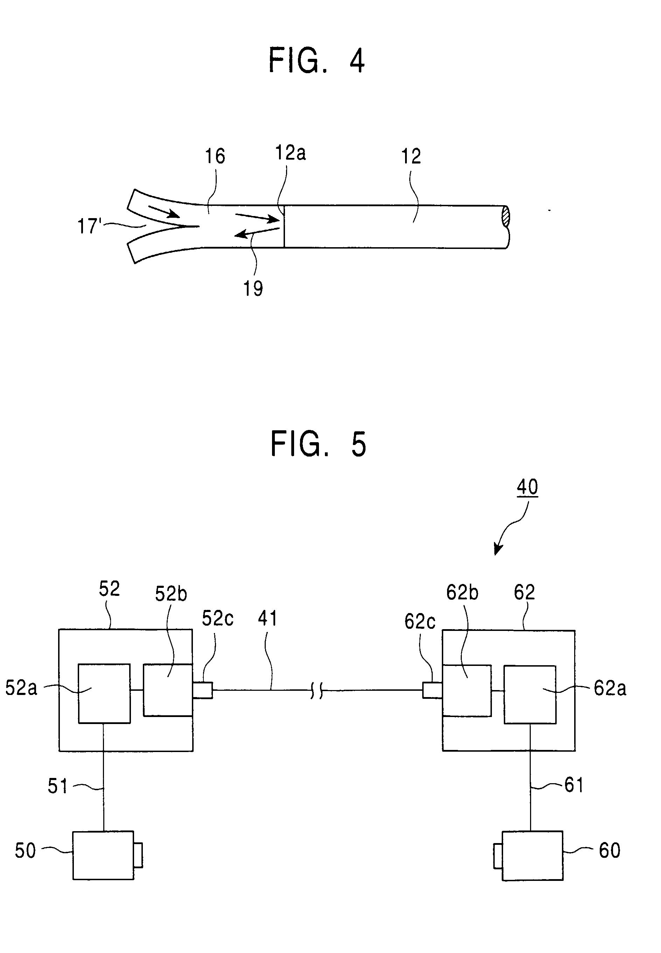

Before explaining a theory of operation of the optical connection part 15a of the first embodiment with reference to Fig. 2D, operation of a conventional optical connection part is explained with reference to Fig. 4. In Fig. 4, a conventional optical connection part 16 of a optical fiber cable 11 is adhered to the end face 12a of the optical fiber 12. The optical connection part 16 is manufactured by adding cut out 17' to a single core type fiber material. In this case, there exists a problem that the signal light incident from a transmitting side generates a reflected signal light at a gap or the end face 12a of the optical fiber 12 adhered to one end of the optical connection part 16. Thus generated reflected signal light incidents on a receiving side as shown by an arrow 19 in Fig. 4, and this reflected signal light interferes a detection of true signal light transmitted through the optical fiber 12 and incident on the receiving side of the optical connection part 16.

It is possible to reduce the reflected signal light by filling a refraction index matching material at the gap or the end face 12a, but it is practically difficult to completely suppress the reflected signal light even by taking a strict matching. For example in the case where the optical connection part and the optical fiber 12 are respectively made of the PMMA, the reflected signal light having about 1 percent in strength relative to the incident signal light strength from the transmitting side is detected at the receiving side when the gap is filled with adhesive of cyanoacrylate system.

Fig. 2D shows an operation theory of the optical connection part 15a of this first embodiment of the present invention. The optical connection part 15a has the incident optical fiber 13a and the light detecting optical fiber 14a, wherein the signal light incident from the incident optical fiber 13a of a multi-core type is reflected at the gap or the end face 12a of the optical fiber 12, but a propagation path for the signal light is determined by each of the multi-core material 18a as shown in Fig. 2D. Namely, even the incident signal light transmitted though one core of the multi-core material 18a is reflected at the gap or end face 12a of the optical fiber 12, the most of the reflected signal light is returned to the same core of the multi-core material 18a, and do not enter into the light detecting optical fiber 14a.

As a result of an experiment done with this construction as shown in Fig. 2C and with similar materials, the strength of return light to the light detecting optical fiber 14a was less than 0.1 percent of the strength of the optical signal light incident on the incident optical fiber 13a. Accordingly, it is possible to reduce a reflected signal light noise and to achieve a two-way full-duplex optical digital communication with a single core type single wire optical fiber by applying the first embodiment of the optical connection part 15 of the present invention.

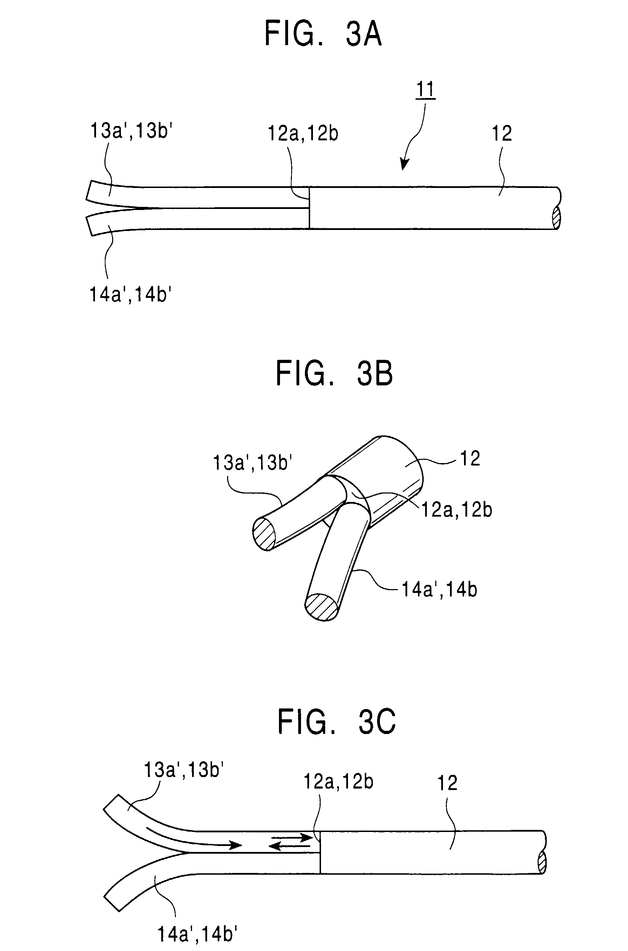

A second embodiment of the optical connection part 15 is now explained with reference to Figs. 3A, 3B and 3C, wherein the above described optical fiber cable 11 is made of a single core type single wire optical fiber 12 as described in the first embodiment. In this second embodiment, a single core type single wire incident optical fiber 13a' ( 13b' ) for incidence of a transmitting signal light, and a single core type single wire light detecting optical fiber 14a' ( 14b' ) for deriving a receiving signal light are adhered to the end face 12a ( 12b ) of the optical fiber 12.

Like the above described first embodiment, the above described optical fiber 12 is used a conventional single core type plastic optical fiber material of the PMMA ( polymethylmethacrylate ) system, and a core diameter is, for example, about 980 µ m and an outer diameter of a clad is about 1000 µ m, for example, and a polish of particle size of about 1 µ m in diameter is treated on the both end faces.

The above described single core type incident optical fiber 13a' ( 13b' ) and the single core type light detecting optical fiber 14a' ( 14b' ) are mechanically coupled to the end face of the optical fiber 12 by adhering with a cyanoacrylate instant adhesive, for example, and the other face is connected to the light transmitting device 21 ( 22 ) and the light receiving devices 31 ( 32 ), respectively as shown in Fig. 3A and 3B.

The incident optical fiber 13a ( 13b, 13a', 13b' ) and the light detecting optical fiber 14a ( 14b, 14a', 14b' ) included in the optical connection part 15a ( 15b ) for the optical fiber cable 11 are optically separated each other as explained in the first and second embodiments of the present invention, so that the signal light from the incident optical fiber 13a ( 13b, 13a', 13b' ) does not undesirably invaded into the detecting optical fiber 14a ( 14b, 14a', 14b' ). Accordingly, only a single wire optical fiber is necessary for the two-way full-duplex optical digital communication apparatus in accordance with the present invention.

In the first and second embodiments of the optical connection part 15a ( 15b ) for the optical fiber cable 11, only one set of incident optical fiber 13a ( 13b, 13a', 13b' ) and the light detecting optical fiber 14a ( 14b, 14a', 14b' ) are mechanically coupled to the end face 12a ( 12b ) of the optical fiber 12 by adhering with a cyanoacrylate instant adhesive, for example. But two sets of incident optical fiber and the light detecting optical fiber can be mechanically coupled to the end face 12a ( 12b ) of the optical fiber 12, when two channels of independent two-way full-duplex optical digital communication are required using a single core type wire single wire optical fiber 12 for the optical fiber cable 11.

Fig. 5 shows an optical digital video communication apparatus to which the optical connection part of the present invention is applied. In Fig. 5, an optical digital video communication apparatus 40 executes an optical digital video communication among connected consumer digital appliances.

The optical digital video communication apparatus 40 is so constructed as to execute the two-way full-duplex optical digital communication between consumer digital video camera system 50 and 60 of the DV ( Digital Video ) standard for consumer digital appliances.

Namely, the optical digital video communication apparatus 40 comprises of an optical signal transmitting and signal receiving section 52 to which one of the digital video camera system 50 is connected by way of a twisted pair cupper cable 51, an optical signal transmitting and signal receiving section 62 to which the other of the digital video camera system 60 is connected by way of a twisted pair cupper cable 61 and a single core type single wire optical fiber cable 41 which optically connects these optical transmitting and receiving sections 52 and 62 each other.

Herein, the consumer digital video camera system 50 ( 60 ) is so constructed as to be possible to perform an input/output operation for the digital video signal of the IEEE-1394 standard.

Further the above described optical transmitting and receiving section 52 ( 62 ) comprises of an IEEE- 1394 controller LSI 52a ( 62a ), an optical signal emission and detection section 52b ( 62b ) and an optical connection part 52c ( 62c ), respectively.

Further the above described optical signal emission and detection section 52b ( 62b ) comprises of an unit including a light emitting device and its driving circuit, a light detecting device and an amplifier and a serial to parallel converting circuit as conventional.

Further one end of the incident optical fiber and the light detecting optical fiber of the above-described optical connection part 52c ( 62c ) is fixed to an end of a single core type single wire optical fiber of 20 m long by adhesive, and the other end thereof is coupled to the light emitting device and the light detecting device of the optical signal transmitting and receiving section 52b ( 62b ).

In this case, a laser diode of 650 nm in wave-length is employed as the light emitting device, for example, but not limited to this, and the other type of light emitting device or a light source which emits a light of the other wave-length or different kind of light emitting device can be employed.

Further a PIN type photo diode is employed as the light detecting device, but not limited to this PIN type photo diode and the other type of light detecting device can be employed. Using the optical digital video communication apparatus 40 having the above described construction, the digital video camera system 50 takes images, and thus obtained digital video data is transmitted to the digital video camera system 60 from the digital video camera system 50 and the digital video data is displayed on a video monitor device equipped in the digital video camera system 60.

In this case, it is possible to transmit an asynchronous moving digital video signal at a transmitting speed of 125Mbit/sec. ( S100 in the IEEE standard ), and the similar propagation characteristic of the conventional optical digital video communication apparatus using a pair of single wire optical fiber is obtained.

Accordingly, in the case where the two-way full-duplex type optical digital video communication is done between the digital video camera system 50 and 60 of the consumer type digital appliances, almost all of the light signal from the incident optical fiber are returned into the incident optical fiber even being reflected at the gap of the end face of the optical fiber as above described, and not incident into the light detecting optical fiber.

Further the optical fiber cable 41 for connecting the consumer digital appliances or the like is equipped with a single wire type optical fiber according to the present invention, thereby the cost of the fiber cable 41 is reduced. Further the conventional a pair line having two optical fiber cable is not used, so that the working efficiency for laying on the optical fiber cable 41 is fully improved.

While I have described and shown the particular embodiments of our invention, it will be understood that many modifications may be made without departing from the spirit thereof, and I contemplate by the appended claims to cover any modifications as fall within the true spirit and scope of my invention.

## Claims

1. An optical connection part for an optical two-way full-duplex communication cable, comprising:
a single core type optical fiber for transmitting a signal light there-through;
at least one incident optical fiber adhered to an end face of said single core type optical fiber; and
at least one detecting optical fiber adhered to said end face of the single core type optical fiber, wherein said detecting optical fiber being optically separated from said incident optical fiber.

2. An optical connection part for an optical two-way full-duplex communication cable, comprising:
a single core type optical fiber for transmitting a signal light;
at least one incident optical fiber adhered to an end face of said single core type optical fiber, wherein said incident optical fiber being formed by multi core type optical fiber; and
at least one detecting optical fiber adhered to said end face of the single core type optical fiber, wherein said incident optical fiber being formed by multi core type optical fiber.

3. An optical connection part for an optical two-way full-duplex communication cable, comprising:
a single core type optical fiber for transmitting a signal light;
at least one incident optical fiber adhered to an end face of said single core type optical fiber, wherein said incident optical fiber being formed by single core type optical fiber; and
at least one detecting optical fiber adhered to said end face of the single core type optical fiber, wherein said incident optical fiber being formed by single core type optical fiber.

4. An optical connection part for an optical two-way full-duplex communication cable as claimed in Claim 1, Claim 2 or Claim 3, further comprising:
at least one light transmitting device coupled to said incident optical fiber; and
at least one light receiving device coupled to said detecting optical fiber.

5. An optical connection part for an optical two-way full-duplex communication cable as claimed in Claim 1, Claim 2 or Claim 3, wherein
said single core type optical fiber, said incident optical fiber and said detecting optical fiber are all being made from plastic fiber material of the PMMA system.

6. An optical digital communication system for optical two-way full-duplex digital communication between a plurality of digital appliances, comprising:
a single wire optical fiber of a single core type provided between two of said digital appliances; and
a pair of optical connection part, each comprising
an incident optical fiber adhered to an end face of said single core type optical fiber, wherein said incident optical fiber being formed by multi core type optical fiber; and
a detecting optical fiber adhered to said end face of the single core type optical fiber, wherein said incident optical fiber being formed by multi core type optical fiber.

7. An optical digital communication system for optical two-way full-duplex digital communication between a plurality of digital appliances, comprising:
a single wire optical fiber of a single core type provided between two of said digital appliances; and
a pair of optical connection part, each comprising
an incident optical fiber adhered to an end face of said single core type optical fiber, wherein said incident optical fiber being formed by a single core type optical fiber; and
a detecting optical fiber adhered to said end face of the single core type optical fiber, wherein said incident optical fiber being formed by a single core type optical fiber.

8. An optical digital communication system for optical two-way full-duplex digital communication between a plurality of digital appliances, comprising:
a single wire optical fiber of a single core type provided between two of said digital appliances; and
a pair of optical connection part, each comprising
an incident optical fiber adhered to an end face of said single core type optical fiber,; and
a detecting optical fiber adhered to said end face of the single core type optical fiber, wherein said detecting optical fiber being optically separated from said incident optical fiber.
9. An optical digital communication system for optical digital communication between a plurality of digital appliances as Claimed in Claim 6, Claim 7 or Claim 8, wherein
said single core type optical fiber, said incident optical fiber and said detecting optical fiber are all being made from plastic fiber material of the PMMA system.
